# DEMANDE DE BREVET EUROPEEN

(11) **EP 0 524 094 A1**
(43) Date de publication de la demande: **20.01.1993**
(21) Numéro de dépôt: 92402047.2
(22) Date de dépôt: 15.07.1992
(51) Int. Cl.: B62D 5/12, B62D 5/24

(54) **Dispositif d'assistance pour direction assistée de véhicule**

(30) Priorité: 15.07.1991 FR 9109251
(71) Demandeur: SOCIETE AQUITAINE DE FONDERIE AUTOMOBILE SADEFA, F-47500 Fumel (FR)
(72) Inventeur: Chartron, Alain, F-78955 Carrieres Sous Poissy (FR); Colombaro, Roger, F-78150 Le Chesnay (FR); Coue, Marcel, F-95130 Franconville (FR); Futeul, Jean-Luc, F-78960 Voisins le Bretonneux (FR); Gendrau, Christian, F-78114 Magny Les Hameaux (FR); Imbault, Jacques, F-75018 Paris (FR); Omari, Mokrane, F-78990 Elancourt (FR); Monnet, Eric, F-78600 Maisons Laffitte (FR); Perdriau, Marcel, F-78360 Montesson (FR); Rabia, Abdelkader, F-92800 Puteaux (FR)
(74) Mandataire: de Saint-Palais, Arnaud Marie

(57) **Abrégé**

Le dispositif d'assistance selon l'invention comprend, logés dans un même carter (1), deux arbres rotatifs coaxiaux (2, 3) reliés l'un à l'autre par un ressort de torsion (4) et dont l'un, de type mené, est muni d'un filetage hélicoïdal (6), un ensemble cylindrique (7)/piston (8) dont les chambres de travail (9, 9′) sont alimentées en fluide hydraulique sous pression, par l'intermédiaire d'un distributeur (10) piloté en fonction de l'écart angulaire entre les deux arbres (2, 3), une noix de transmission (11) solidaire d'un arbre de sortie (12), qui engrène avec le filetage (6) de l'arbre mené (3) et avec une crémaillère (14) portée par la tige (15) du piston (8), et une pièce d'appui (19) servant à retenir la tige (15) en un emplacement opposé à la noix (11). Cette pièce d'appui (19), de même que la garniture du piston (8), sont réalisées en un plastomère chargé.

L'invention permet de réduire les frottements ainsi que l'usure.

## Description

La présente invention a pour objet des perfectionnements à un dispositif d'assistance pour direction assistée du type de ceux usuellement utilisés dans des véhicules automobiles.

D'une façon générale, on sait que les dispositifs de direction assistée de ce genre font intervenir, logés dans un même boîtier ou carter :
- deux arbres coaxiaux reliés l'un à l'autre par un ressort de torsion, l'un de ces deux arbres, qui constitue l'arbre menant, étant couplé au volant de direction du véhicule par un dispositif de transmission approprié (colonne de direction), tandis que l'autre, qui constitue l'arbre mené, présente un profil biconcave muni d'un filetage hélicoïdal ;
- un ensemble cylindre/piston axé perpendiculairement à l'arbre de sortie, dont la chambre de travail est alimentée en fluide hydraulique sous pression, par l'intermédiaire d'un distributeur piloté en fonction de l'écart angulaire entre l'arbre menant et l'arbre mené ;
- une noix de transmission solidaire en rotation d'un arbre de sortie axé normalement aux deux susdits arbres, cette noix comportant, d'un côté, une denture en forme de demi-pignon, qui vient engrener avec une crémaillère portée par la tige du piston et qui forme, de l'autre côté, une chape dans laquelle est monté pivotant un galet autour d'un axe transversal (parallèle aux arbres menant et mené), ce galet étant muni d'une double denture circulaire qui vient engrener avec le filet hélicoïdal porté par l'arbre mené.

Bien entendu, l'arbre de sortie attaque le mécanisme de direction du véhicule.

Il est clair qu'une rotation de l'arbre menant engendre une rotation de l'arbre de sortie :
- d'une part, directement, grâce à l'action du filetage hélicoïdal sur le galet porté par la noix, et
- d'autre part, indirectement, grâce à l'action de l'ensemble piston/crémaillère sur la noix, qui assure une assistance fonction de l'écart angulaire entre l'arbre menant et l'arbre mené.

Il s'avère qu'en raison du type de cinématique utilisé, la tige du piston est soumise à des composantes transversales relativement importantes des efforts transmis entre la noix et la crémaillère (ceci est dû notamment au mode d'engrènement des dents de la noix sur les dents de la crémaillère).

Bien entendu, l'existence de ces composantes transversales pose un problème particulièrement délicat, tant en ce qui concerne le guidage de l'ensemble tige/piston, que l'étanchéité cylindre/piston.

Il est clair que ces composantes transversales vont engendrer, à la longue, des phénomènes d'usure des portées coulissantes de la tige et une ovalisation prématurée du cylindre, cette ovalisation conduisant tôt ou tard à des défauts d'étanchéité.

En outre, ces contraintes provoquent une augmentation des forces de frottement qui nécessitent un surdimensionnement de l'ensemble cylindre/piston qui assure l'assistance de la direction.

Pour tenter de supprimer ces inconvénients, on a déjà proposé une solution consistant à utiliser pour le guidage de la tige du piston, une pièce d'appui diamétralement opposée à la noix et, pour l'étanchéité, un segment métallique partiellement logé dans une gorge annulaire du piston.

Il est clair que si l'on veut éviter autant que possible tout effet de rotule au niveau du piston et, en conséquence, une accélération de l'usure au niveau de la chemise, la précision du guidage de la tige de piston doit être aussi élevée que possible. C'est la raison pour laquelle on utilise aussi bien pour la réalisation de l'ensemble tige/piston et de la pièce d'appui des aciers (habituellement cémentés et trempés) particulièrement durs et possédant des propriétés de friction appropriées pour un glissement métal/métal.

On constate que cette solution, au demeurant relativement coûteuse, n'est pas totalement satisfaisante en ce qui concerne l'usure et les forces de frottement.

L'invention a donc plus particulièrement pour but de supprimer tous ces inconvénients.

Contrairement aux solutions précédemment évoquées et aux préjugés de l'homme de l'art, elle propose de réaliser la garniture d'étanchéité venant en contact avec le cylindre et la partie de la pièce d'appui sur laquelle la tige du piston vient coulisser, en plastomère chargé tel que du PTFE (polytétrafluoréthylène) ou du FEP chargé, par exemple, par de la fibre de verre.

Avantageusement, le piston pourra comprendre une surface cylindrique comportant, dans sa partie centrale, une gorge annulaire bordée du côté de la tige par un bord chanfreiné (par exemple conique ou sphérique) et, de l'autre côté, un bord cylindrique de plus faible diamètre. Dans ce cas, la garniture d'étanchéité pourra comprendre un ensemble formé par une bague annulaire en plastomère chargé, montée sur un sommier annulaire en élastomère, cet ensemble étant engagé dans la gorge annulaire et retenu axialement du côté opposé au bord chanfreiné, par une pièce annulaire, de profil en forme de cornière, dont une aile s'engage dans la gorge, tandis que l'autre aile vient en recouvrement sur le susdit bord cylindrique, le diamètre intérieur de la bague annulaire étant sensiblement égal au diamètre intérieur de la pièce annulaire et à celui de l'alésage du cylindre, de manière à obtenir un contact glissant de la pièce sur le cylindre.

Selon un autre mode d'exécution de l'invention, les deux bords respectivement situés de part et d'autre de la gorge du piston sont cylindriques. Dans ce cas, l'ensemble formé par la bague et le sommier peut être retenu latéralement, à l'intérieur de la gorge, par deux pièces annulaires de profil en forme de cornière venant respectivement en retour sur lesdits bords.

La partie de la pièce d'appui sur laquelle vient porter la tige du piston peut, quant à elle, consister :
- en une pastille intégrée dans un poussoir réglable,
- en un patin monobloc maintenu en position dans un alésage du boîtier, par exemple grâce à une pastille et un circlip, ou bien
- en un patin monobloc à assise semi-circulaire posé et immobilisé en un emplacement usiné dans le boîtier.

Des modes d'exécution de l'invention seront décrits ci-après , à titre d'exemples non limitatifs, avec référence aux dessins annexés dans lesquels :
La figure 1 est une coupe axiale schématique d'un dispositif de direction assistée selon l'invention ;
La figure 2 est une vue à plus grande échelle d'un premier mode d'exécution de la garniture d'étanchéité du piston, utilisable dans le dispositif représenté figure 1 ;
Les figures 3 et 4 sont des coupes partielles montrant un deuxième mode d'exécution de la pièce d'appui sur laquelle coulisse la tige du piston (figure 3) et de la garniture d'étanchéité du piston (figure 4) ;
Les figures 5 et 6 représentent respectivement en coupe axiale (figure 5) et en coupe transversale (selon A/A de la figure 5) une pièce d'appui en forme de coquille cylindrique (figure 6) ;
Les figures 7 et 8 montrent, en coupe axiale (figure 7) et en coupe transversale (figure 8), une autre variante d'exécution de la pièce d'appui.

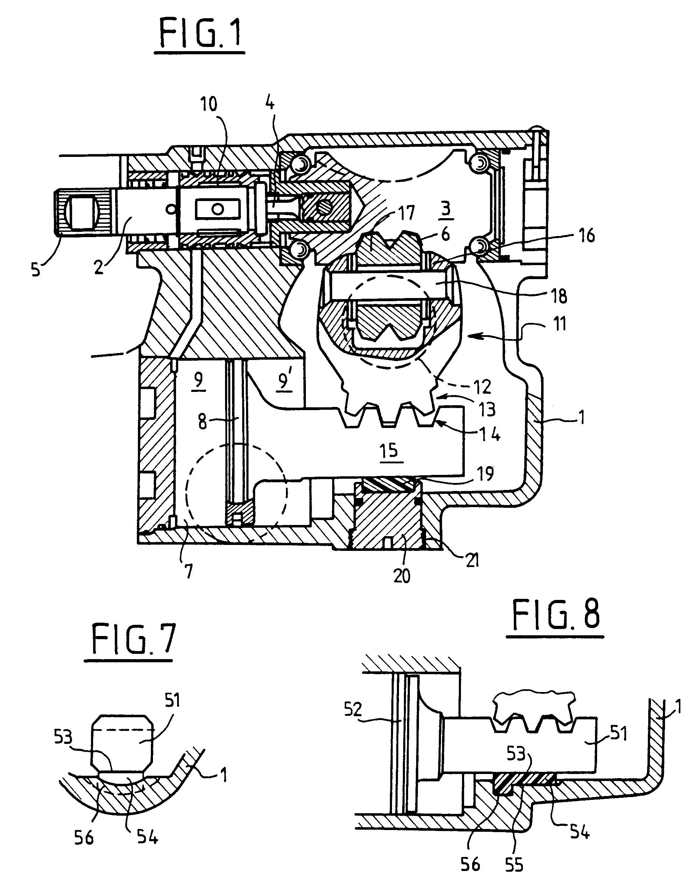

D'une façon analogue à celle précédemment évoquée, le dispositif de direction représenté figure 1 comprend, à l'intérieur d'un carter 1 :
- deux arbres rotatifs 2, 3 coaxiaux accouplés l'un à l'autre par un ressort de torsion 4, l'arbre 2 ressortant du carter 1 (maneton 5) pour pouvoir s'accoupler par exemple à la colonne de direction d'un véhicule automobile, l'arbre 3 présente, quant à lui, un profil biconcave (forme de diabolo) muni d'un filetage hélicoïdal 6 et joue, de ce fait, le rôle d'une vis sans fin ;
- un ensemble cylindre 7/piston 8, axé perpendiculairement à l'arbre de sortie 12, dont les chambres de travail 9, 9′ situées de part et d'autre du piston sont alimentées en fluide sous pression par l'intermédiaire d'un distributeur rotatif 10 associé à l'arbre 2 et conçu de manière à commander le débit de fluide hydraulique injecté dans les chambres 9, 9′, en fonction de l'écart angulaire entre les arbres 2 et 3 ;
- une noix de transmission 11 solidaire en rotation d'un arbre de sortie 12 (en trains interrompus) axé perpendiculairement au plan de la figure 1 ; cette noix 11 comporte, d'un côté, une denture 13 en forme de demi-pignon, qui vient engrener avec une crémaillère 14 portée par la tige 15 du piston 8 et qui forme, de l'autre côté, une chape 16 dans laquelle est monté pivotant un galet 17, autour d'un axe transversal 18 (parallèle aux arbres 2 et 3), ce galet 17 étant muni d'une double denture circulaire qui vient engrener avec le filet hélicoïdal 6 porté par l'arbre 3.

Dans cet exemple, le guidage de la tige 15 du piston 8, à l'opposé de la noix de transmission 11, est assuré par une pastille cylindrique 19 réalisée en plastomère armé de fibres de verre partiellement enchâssée dans un logement circulaire d'une pièce cylindrique 20 venant se visser avec étanchéité, dans un alésage taraudé 21 du carter 1.

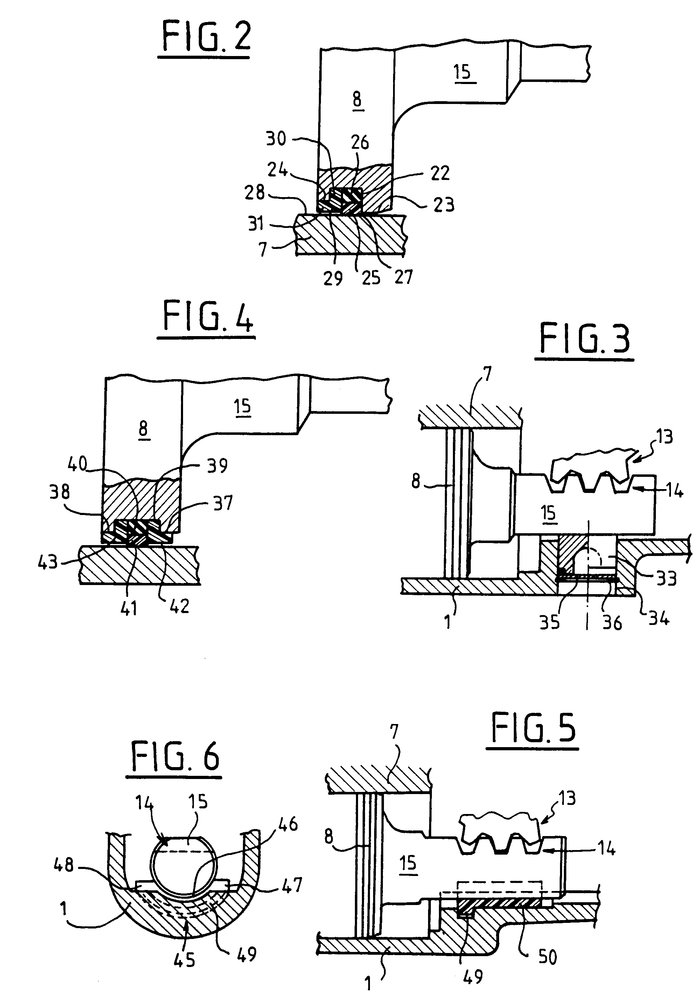

La tranche du piston, qui coulisse avec étanchéité dans le cylindre, comprend une gorge circulaire 22 bordée du côté de la tige 15 par une partie sensiblement conique 23 et, de l'autre côté, par une partie cylindrique 24 de diamètre inférieur au diamètre de la partie sphérique 23 (figure 2).

La garniture d'étanchéité associée au piston 8 comprend un ensemble constitué par un élément annulaire 25 de section rectangulaire réalisé en plastomère armé de fibres de verre contre lequel est disposé un anneau en élastomère 26 servant de sommier élastique. Cet ensemble 25, 26 est engagé dans la gorge 22 de manière à ce que la surface cylindrique extérieure 27 de l'élément annulaire 25 vienne en appui sur l'alésage 28 du cylindre 7 tout en autorisant un léger décentrage du piston 8 (en raison du sommier 26).

Cet ensemble est maintenu axialement, d'un côté, par la face radiale de la gorge 22 orientée vers la tige 15 et, de l'autre côté, par une face radiale d'une pièce annulaire 29 en plastomère armé qui présente une section en forme de cornière, dont l'une des deux ailes 30 s'engage dans la gorge 22, tandis que l'autre 31 vient en recouvrement sur la bordure cylindrique 24.

Un avantage de la structure précédemment décrite, réside tout d'abord dans le fait que les portées coulissantes sont toutes de type plastomère/métal et sont donc à très bas coefficient de frottement. Les efforts à appliquer par le piston seront donc réduits et les phénomènes d'usure s'en trouveront donc diminués.

Par ailleurs, l'effet de rotule pouvant se produire au niveau du piston 8, par exemple en raison d'un effort transversal intense engendré au niveau de la transmission noix 11/crémaillère 15, n'engendrera pas un défaut d'étanchéité, ni même une attaque du cylindre 7 par le segment ou par la surface cylindrique de guidage attenant à ce dernier. En effet, l'élément annulaire 25 repoussé par le sommier 26 aura tendance à se maintenir contre l'alésage du cylindre 7 sans aucun risque d'en provoquer l'ovalisation.

Tout contact métal/métal est rendu impossible même dans le cas où l'inclinaison de l'ensemble tige 15/piston 8 par rapport à l'axe du cylindre 7 devient important. Dans ce cas, le contact entre la bordure 23 et le cylindre 7 est évité grâce à la forme sphérique de la bordure 23. Par contre, l'aile 31 de la pièce annulaire 29 viendra en appui sur le cylindre 7 en exerçant un effort résistant tendant à s'opposer à l'inclinaison prise par l'ensemble tige 15/piston 8. Compte tenu de la matière de la pièce 25, cet appui ne provoquera pas d'usure ni même de frottement important.

Dans l'exemple représenté sur les figures 3 et 4, la pièce d'appui de la tige 15 du piston 8 consiste en une pièce cylindrique monobloc 33 engagée, avec étanchéité, dans un alésage 34 réalisé dans le carter 1 et maintenu axialement en position grâce à une pastille cylindrique 35 retenue par un circlip 36.

Dans cet exemple, la tranche du piston comprend deux rebords cylindriques 37, 38 bordant la gorge annulaire 39. L'ensemble sommier 40, élément annulaire d'étanchéité 41, est ici axialement retenu des deux côtés par deux pièces annulaires respectives 42, 43 de section en forme de cornière dont une aile s'engage dans la gorge 39 et dont l'autre aile vient en recouvrement du rebord adjacent 37, 38.

L'avantage de cette solution par rapport à la précédente consiste en ce que l'on obtient, lors d'un effet de rotule, une symétrisation des efforts résistants exercés par les pièces annulaires 42, 43 toutes deux en plastomère armé.

Dans les exemples précédemment décrits, les surfaces d'appui de la tige 15 du piston et de la pièce d'appui 20, 33 sont planes.

Bien entendu, l'invention ne se limite pas à une telle disposition.

Ainsi, la tige 15 pourrait présenter une forme cylindrique, et la pièce d'appui la forme d'une coquille 45 présentant une surface cylindrique concave 46 sensiblement complémentaire de celle de la tige 15.

Dans cet exemple, la coquille 45 présente une forme centrale cylindrique bordée de deux ailes latérales 47, 48.

En outre, cette coquille comprend, à l'une de ses extrémités, un rebord d'ancrage 49 radialement en saillie par rapport à sa face convexe 50. Elle est engagée par cette dernière dans un logement de forme sensiblement complémentaire prévu dans le carter 1.

Cette solution présente l'avantage d'assurer un meilleur guidage de l'ensemble tige/piston et une meilleure répartition des efforts exercés au niveau de la transmission noix 11/crémaillère 14.

Le mode d'ancrage de la pièce d'appui dans le carter précédemment décrit, peut être utilisé dans le cas où les portées coulissantes de la tige du piston et de la pièce d'appui sont planes.

Les figures 7 et 8 représentent un mode d'exécution dans lequel la tige 51 du piston 52, de forme sensiblement carrée, coulisse sur une face d'appui plane 53 d'une pièce d'appui 54 de section axiale en forme de L partiellement engagée dans un évidement 55, de forme complémentaire, prévu dans le carter 1.

D'une façon analogue à la précédente, la face convexe (de forme cylindrique) de cette pièce d'appui, qui est opposée à la face d'appui 54, présente, à l'une de ses extrémités, un rebord d'ancrage 56 radialement en saillie, qui s'engage dans une cavité de forme complémentaire de l'évidement 55. Cette disposition permet d'assurer un meilleur blocage axial de la pièce d'appui 54.

## Revendications

1. Dispositif d'assistance pour direction assistée du type comprenant, logés dans un même carter (1) :
- deux arbres rotatifs coaxiaux (2, 3) reliés l'un à l'autre par un ressort de torsion (4), l'un de ces deux arbres étant de type menant, tandis que l'autre, de type mené, est muni d'un filetage hélicoïdal (6),
- un ensemble cylindre(7)/piston (8), dont les chambres de travail (9, 9') sont alimentées en fluide hydraulique sous pression, par l'intermédiaire d'un distributeur (10) piloté en fonction de l'écart angulaire entre l'arbre menant (2) et l'arbre mené (3),
- une noix de transmission (11) solidaire en rotation de l'arbre de sortie (12), cette noix comportant, d'un côté, une denture (13) en forme de demi-pignon, qui vient engrener avec une crémaillère (14) portée par la tige (15) du piston (8) et qui forme, de l'autre côté, une chape (16) dans laquelle est monté pivotant un galet (17) muni d'au moins une denture circulaire qui vient engrener avec le filet hélicoïdal porté par l'arbre mené (3), et
- une pièce d'appui (19) servant à retenir la tige (15) en un emplacement opposé à la noix (11),
caractérisé en ce que la susdite pièce d'appui (19) ainsi que la garniture d'étanchéité équipant le piston (8) pour assurer un coulissement étanche dans le cylindre (7) sont réalisées en un plastomère chargé.

2. Dispositif selon la revendication 1, caractérisé en ce que le susdit plastomère est chargé avec de la fibre de verre.

3. Dispositif selon l'une des revendications 1 et 2,
caractérisé en ce que le piston (8) comprend une surface cylindrique comportant dans sa partie centrale une gorge annulaire (22) bordée, du côté de la tige (15), par un bord chanfreiné (23) et, de l'autre côté, par un bord cylindrique (24), et en ce que la garniture d'étanchéité comprend un ensemble formé par une bague annulaire (25) en plastomère chargé montée sur un sommier annulaire (26) en élastomère, cet ensemble étant engagé dans la gorge annulaire (22) et retenu axialement, du côté opposé au bord chanfreiné (23), par une pièce annulaire (29) de profil en forme de cornière dont une aile s'engage dans la gorge (22), tandis que l'autre aile vient en recouvrement sur le bord cylindrique (24), le diamètre intérieur de la bague annulaire (25) étant inférieur au diamètre intérieur de la pièce annulaire (29).

4. Dispositif selon l'une des revendications 1 et 2,
caractérisé en ce que le piston (8) comprend une surface cylindrique comportant dans sa partie centrale une gorge annulaire (39) bordée des deux côtés par deux bordures cylindriques (37, 38) respectives, et en ce que la garniture d'étanchéité comprend un ensemble formé par une bague annulaire (41) en plastomère chargé montée sur un sommier annulaire (40) en élastomère, cet ensemble étant engagé dans la gorge annulaire (39) et retenu axialement à l'intérieur de cette gorge (39) par deux pièces annulaires (42, 43) de profil en forme de cornière venant respectivement en retour sur lesdits bords (37, 38).

5. Dispositif selon l'une des revendications précédentes,
caractérisé en ce que la susdite pièce d'appui consiste en une pastille (19) encastrée dans le logement correspondant d'une pièce support (20) réglable en position.

6. Dispositif selon la revendication 5,
caractérisé en ce que la pièce support (20) est vissée dans un alésage taraudé (21) du carter (1).

7. Dispositif selon l'une des revendications 1 à 4,
caractérisé en ce que la susdite pièce d'appui consiste en un patin monobloc (33) axialement retenu dans un alésage prévu dans le carter.

8. Dispositif selon l'une des revendications 1 à 4,
caractérisé en ce que la tige (15) du piston (8) présente une forme cylindrique convexe, et la pièce d'appui présente une surface cylindrique concave sensiblement complémentaire de celle de la tige.

9. Dispositif selon la revendication 8,
caractérisé en ce que la pièce d'appui présente la forme d'une coquille (45) comportant une partie centrale cylindrique bordée de deux ailes latérales (47, 48) et est engagée dans un logement de forme sensiblement complémentaire prévu dans le carter (1).

10. Dispositif selon la revendication 9,
caractérisé en ce que la susdite coquille comprend en outre un rebord d'ancrage (49) radialement en saillie par rapport à sa face convexe (50).

11. Dispositif selon l'une des revendications 1 à 4,
caractérisé en ce que la pièce d'appui comprend une face d'appui plane (53) sur laquelle vient coulisser la tige (51) du piston (50) et une face convexe, opposée à la face d'appui, qui présente, à l'une de ses extrémités, un rebord d'ancrage (56) radialement en saillie, cette pièce d'appui s'engageant dans un évidement de forme sensiblement complémentaire réalisé dans le carter.
